**Europäisches Patentamt**

**European Patent Office**

**Office européen des brevets**

(19)

(11) **EP 0 347 219 B1**

(12) ## EUROPEAN PATENT SPECIFICATION

(45) Date of publication and mention
of the grant of the patent:
**11.12.1996 Bulletin 1996/50**

(51) Int. Cl.$^6$: **B65D 65/38**, B65D 77/06

(21) Application number: **89306066.5**

(22) Date of filing: **15.06.1989**

(54) **Packaging for liquids**

Verpackung für Flüssigkeiten

Emballage pour liquides

(84) Designated Contracting States:
**AT BE CH DE ES FR GB GR IT LI LU NL SE**

(30) Priority: **15.06.1988 GB 8814159**
**15.06.1988 GB 8814158**
**17.02.1989 GB 8903707**

(43) Date of publication of application:
**20.12.1989 Bulletin 1989/51**

(60) Divisional application: **96105693.4**

(73) Proprietor: **RHONE-POULENC AGRICULTURE LIMITED**
**Ongar, Essex CM5 0HW (GB)**

(72) Inventors:
 • **Edwards, David Brian**
  **Dagenham Essex RM10 7XS (GB)**
 • **McCarthy, William John**
  **Dagenham Essex RM10 7XS (GB)**
 • **Aldred, Alan James**
  **Dagenham Essex RM10 7XS (GB)**
 • **Jackman, Anthony Douglas**
  **Pyrford Surrey (GB)**

(74) Representative: **Bentham, Stephen et al**
 **J.A. KEMP & CO.**
 **14 South Square**
 **Gray's Inn**
 **London WC1R 5LX (GB)**

(56) References cited:
 FR-A- 1 376 764          FR-A- 2 044 386
 GB-A- 1 524 037          US-A- 4 227 615
 US-A- 4 381 848          US-A- 4 605 142

Remarks:
 Consolidated with 89906809.2/0420889 (European
 application No./publication No.) by decision dated
 21.08.91.

EP 0 347 219 B1

## Description

This invention relates to a package for a liquid chemical or a chemical dissolved or dispersed in an organic liquid, the package being adapted to release its contents on contact with water.

Chemicals such as pesticides and herbicides and other potentially harmful materials are often produced as a concentrated solution or dispersion in an organic liquid. Such chemicals are typically supplied in a metal or blow-moulded plastics container with a screw closure. To use the chemical pesticides or herbicides a quantity of the concentrated material is measured out of the container and then mixed with a large volume of water before being sprayed onto a locus to be treated or onto plants. Such concentrated chemical solutions are usually highly toxic so great care must be taken in measuring and mixing them to avoid splashing the liquid chemical and to avoid human or animal contact with the concentrated solution or dispersion.

Efforts have been devoted to the design of containers to minimise the risk of accidental spillage or splashing when their contents are used and also to reduce liquid residues remaining in the containers after use. Plastics containers with wide necks to facilitate pouring of their liquid contents have been used. Blow moulded plastics containers having hollow handles have been made in which the hollow handles are isolated from the body of the container to avoid retention of liquid in the handle.

Nevertheless, with present packages it is relatively easy to spill the contents during the mixing process with the resulting risk of contamination of the environment and risk of contact with humans and animals. Also, it is rare to empty the container and farmers, and other users, tend to have partly full containers left around. These represent a further hazard. Even when all of the contents have been used it is difficult to dispose of the empty container. It is also difficult to wash adequately the containers and measuring instruments in which the concentrated solutions or dispersions are handled. These devices represent a further hazard to personnel and to the environment.

GB-A-1524037 describes packages according to the preamble of claim 1 comprising water-disintegrable sachets containing pesticide which may be contained in a container which is substantially impermeable to water from eg rain or an operator's wet hands in order to protect it from premature disintegration.

FR-A-1376764 describes a plastics container for ice cream or other products in which one of the objects of the invention is to provide the containers with a shock-absorbing base to facilitate their telescopic stacking, one inside the other, and avoid their sticking together when stacked.

The present invention provides a package for a liquid comprising an outer container and an inner water-soluble or water-dispersible envelope containing the liquid and insoluble and not dispersible in it, wherein the liquid comprises a phytosanitary chemical and the outer container is semi-rigid having a degree of flexibility which helps absorb shocks or blows and comprises a shock-absorbing base which absorbs shock when the package is dropped, such that the outer container cushions shock loads applied to the envelope, and in that the container comprises a tubular body-part surrounding the envelope and a base-part, the body-part being joined to the base-part by a flexible strip which comprises part of said shock-absorbing base and base-part comprising an internal shoulder of the container on which the envelope is supported to leave a space between the envelope and bottom of the container.

The inner envelope may be disposed in the container with a space between them into which the envelope can deform under stress. The shock absorbing base may be provided by a flexible strip or corrugation in the lower part of the container joining the main part of the container to the base and extending generally radially inwardly of the container from the bottom of the body part of the container to the base part. The flexible strip is preferably formed by a sinuous formation in the wall of the container spaced from the bottom of the container and extending from the body part to the base part. The base may comprise an internal smooth shoulder in the container on which the envelope is supported and under which is formed the space. The container, or part of it, e.g. the foot, may be translucent to allow the user to see if leakage of the envelope has occurred. The container may be made from a semi-rigid material such as polypropylene and is preferably provided with a removable closure or lid which may comprise a flexible foil lid heat-sealed or glued to the container. The lid may be PET, PVDC, PVA, PP or Nylon laminated with aluminium and paper: PET is preferred. The lid is preferably sealed to the top of the container to provide a good barrier to leakage if the envelope breaks; it is preferably bigger than the top of the container to provide a flap which can be gripped easily to remove the lid.

A laminated lid is preferred, for example a paper/aluminium/plastics laminate in which the plastics layer can be heat sealed to the lid to provide a hermetic seal. The aluminium layer provides a barrier against any pinholes which may occur in the plastics layer. The paper provides strength, processability and a label can be printed or stuck onto it. The plastics material is preferably polyethylene terephthalate (PET) which provides a good barrier against possible leakage, has good heat sealing characteristics, allows for easy removal of the lid prior to use, does not contain halogen which is potentially damaging to the environment when the lid is to be disposed of, and withstands shock.

The end of the container remote from the base is preferably not substantially narrower then the rest of the container. The container may be wide-necked and have a smooth interior to allow easy exit of the envelope and may taper towards the base to allow nested stacking of empty containers and also to provide some support against downward movement of the envelope. The inside surface of the container is preferably configured and adapted to facilitate sliding exit of the envelope from the outer container.

The ratio of length to thickness of the flexible section may be between 7:1 and 11:1, preferably 9:1 for a polypropylene container of about 1mm wall thickness. The flexible section may have, in cross-section a lazy S-shape so that it always slopes downwardly inwardly of the container. The package may contain a predetermined quantity of a chemical, e.g. half litre, one litre, which is a liquid or which is dissolved or dispersed in an organic liquid contained in the envelope which will release its contents on contact with water. Thus, in this case, the envelope wall would comprise a water soluble or dispersible material which is insoluble and not dispersible in the organic liquid.

It will be understood that liquid or solid chemicals can be dispersed in the organic liquid : the dispersion can be, for example, an emulsion or a suspension.

The envelope containing the chemical is preferably only partly full so that the envelope comprises an air space which generally occupies from 2 to 40% preferably from 4% to 10%, of the volume of the envelope. A larger space could be used but is less likely to be commercially attractive. Partial filling of the envelope reduces the risk of rupture of the envelope if it is subjected to shock and reduces the risk of rupture or leakage in the event of an increase in temperature which might make the bag swell or sweat.

The volume of chemical is preferably from a half litre to two litres : a half litre is especially preferred.

The container may have a circular cross-section but preferably, it has a substantially square or rectangular cross-section with rounded corners or sides. With such an arrangement less space is wasted when the packages are themselves packed together. The cross sectional shape of the foot portion may be similar to that of the rest of the container or, alternatively, it may be of different section to provide a shock absorbing portion of varying width around the container. Thus, if the container is substantially rectangular or square the foot may be circular in configuration and vice versa.

Such packaging avoids the above difficulties of the prior art. To use the package an appropriate quantity of water is measured out into a vessel such as a sprayer tank and then the envelope, e.g. a bag or sachet, is removed, e.g. tipped, from the container and placed whole into the vessel with a predetermined measure of water and mixed. The contents of the envelope are released when, for example, the material from which e.g a bag or sachet is made dissolves or disperses throughout the water together with the chemical. Thus, there is no possibility of spilling the chemical liquid since it is still in the form of a closed and sealed package when it is mixed with the large volume of water. During mixing any splashing that occurs is splashing only of a diluted chemical and this is naturally not so toxic to personnel or so damaging to the environment should any splashing or spillage occur.

The chemicals which may be packaged include those which are potentially toxic or damaging or detrimental to health or to the environment. They include pesticides for example fungicides, insecticides or herbicides (for example hydroxybenzonitrile herbicides, e.g. bromoxynil or ioxynil or derivatives thereof such as the salts or esters, e.g. heptanoates or octanoates). The pesticides include, e.g. molluscicides for addition to, for example, ponds or streams. When the envelope material is a PVA borates, chlorides and chlorates should generally not be present in the packaged liquid in amounts effective to lead to deterioration of the envelope material or that material should be protected from them.

Suitable water soluble or dispersible materials which are insoluble in the organic solvents used to dissolve or disperse the chemical include polyethylene oxide or methyl cellulose, but preferably the envelope, e.g. a bag or sachet, comprises or is made from polyvinyl alcohol film, i.e. partially or fully alcoholysed or hydrolysed e.g. 40-99%, preferably 70-92% alcoholysed or hydrolysed, polyvinyl acetate film.

The polyvinyl alcohol film may be unoriented, mono-axially oriented or bi-axially oriented. Water soluble materials are preferred. The materials used will generally be cold water soluble; cold water soluble PVA is preferred. It will be understood that other materials may be used when the packaged liquid is to be dissolved or dispersed in warm or hot water.

The maximum tensile strength of the material of the envelope is preferably at least 20, more preferably from 30 to 80 N/mm$^2$ and the elongation at break is preferably 200 to 380%, more preferably from 220 to 350%. Testing for these values is generally carried out at 23°C and 50% relative humidity. The thickness of the envelope material is preferably from 10 to 500, more preferably 20 to 100 micrometres. Combinations of these physical properties are especially preferred.

The polyvinyl alcohol material may be extruded as a tube and then inflated to bi-axially orient it or, more preferably, it may be cast. When a cast film is used as is preferable, a tube is formed from the film and the edges heat sealed along the length of the tube. The tube is sealed at one end and then filled with the desired quantity of the chemical. The tube is again sealed above the quantity of chemical to close the envelope and form, for example, a closed bag or sachet. An air space is preferably left above the liquid in the closed envelope and, in addition, the combined volume of the air space and liquid is preferably less than the maximum possible capacity of the envelope so that it is loosely filled and can flex.

When heat seals are made in order to form or close the envelope containing liquid in the package according to the invention the sealing temperature is generally from 140 to 220°C, preferably 160 to 180°C. The jaw pressure is generally from 1 to $3\frac{1}{2}$ kg/cm$^2$, preferably $1\frac{1}{2}$ to $2\frac{1}{2}$ kg/cm$^2$. The dwell time is generally 200 msec to 1.5 sec, preferably 450 msec to 1 sec.

In order to ensure optimum processability the heat sealing is generally carried out at 15 to 25°C and 15 to 85% relative humidity (RH). The relative humidity is preferably 35 to 55%. Some routine experimentation may be required to obtain suitable heat seals depending on the envelope material, e.g. the particular grade and the thickness of PVA chosen. The quality of the seals can be checked by visual inspection for areas of opacity or for bubbles or, for example, by inflation of bags without liquid contents. Imperfections in the seal may give rise to a lack of water solubility or water dispersibility of the seal. The heat sealing process can be carried out on conventional heat sealing equipment which permits control and variation of the sealing jaw temperature, jaw pressure and dwell time.

In practice the envelopes according to the invention should release their contents in less than about 10 minutes. When a phytosanitary chemical is packaged the packaged chemical will be placed in the spray tank of a conventional sprayer. The tank will generally be partly filled with water, and the packaged chemical added. When the tank is provided with means to agitate the water the contents of the bag will be released more rapidly. It is preferred that release should take place in less than about a minute, for example in 30 to 40 seconds. It will be understood that the time taken to release the chemical will depend on a number of factors apart from the nature of the bag, including the temperature of the water and the level of agitation.

When the envelope is a bag or sachet the thickness of the walls should be kept to a minimum, provided that the walls have adequate strength in order to facilitate rapid dissolution or dispersion in water. A thickness of e.g. about 30 microns is particularly suitable, although large sachets may require thicker walls. The thicker the wall, the longer dissolution or dispersion of the wall material will take. It will be understood that the envelope according to the invention may comprise an area of wall which is more readily dissolved or dispersed than the rest to facilitate more rapid release of the contents of the envelope.

Suitable organic liquid solvents include petroleum based solvents, e.g. petroleum ethers, mineral oils, aliphatic or aromatic hydrocarbons, e.g. hexane, octane, cyclohexane, benzene, xylene and naphthalene, halogenated aliphatic or aromatic hydrocarbons, e.g. carbon tetrachloride, chloroform, methylene chloride and chlorobenzene, esters e.g. amyl acetate, ketones, e.g. cyclohexanone, ethers, or a higher alcohol (lower alcohols may migrate through the water soluble or water dispersible materials described above: this can result in product appearing on the outside of the envelope). It will be understood that mixtures of solvents, e.g. mixtures of a hydrocarbon solvent with another solvent, e.g. a ketone or a higher alcohol, may also be used. The organic liquid must be reasonably dry and typically contains less than 2 to 3% of water to ensure that it does not leak prematurely from the envelope.

The liquid contents of the envelope may be thickened or rendered thixotropic. An increased viscosity in the contents can reduce the likelihood of the envelope being ruptured if the package is subjected to mechanical shock, particularly as the envelope comprises a flexible wall. The contents of the envelope may be rendered more viscous or thixotropic by the inclusion of additives, for example, a modified organophilic, or bentonite, lecithin, polymethylene oxide or silica gel.

The concentrations of pesticide or herbicide dissolved or dispersed in the organic liquid will generally be those conventionally used: in order to reduce the bulk of each envelope, however, concentrations may be increased. Each envelope will preferably contain at least about 500 ml and will preferably contain a convenient standard volume, for example 500 ml or 1 litre, although it will be appreciated that any convenient standard volume may be chosen. The envelope will generally contain from a quarter litre to 3 litres of liquid.

Preferably the outside of the container is printed with information concerning the contents of the envelope, instructions for use, and any warnings concerning the nature and toxicity of the chemical. This information may be carried on the foil lid or on a label attached to the side wall of the outer container.

The space between the envelope and the outer container (which is preferably at least about 5% of the volume of the container; the space will preferably not be more than about 30% : larger spaces could be used but may be less attractive commercially : 20 to 25 % is preferred and about 25% is especially preferred. The space is preferably isolated from the atmosphere for example by a hermetic seal on the outer container. The relative humidity in the space is preferably from 45 to 70% (more preferably 50 to 60%, about 50% being most preferred) at a temperature of 20°C. When the envelope material is PVA film the mechanical properties of the film are affected by its moisture content: moisture in the film is in equilibrium with moisture both in any air space inside the envelope and in any space between the envelope and the outer container.

The point of equilibrium changes with temperature so that the film may either absorb moisture or release it during storage. A relative humidity of 45 to 70% at 20°C has been found to preserve optimum storage properties of the envelope material.

The packaging in accordance with the preferred aspects of this invention provides a tough, two stage packaging which provides for the safe transport of concentrated chemicals and allows handling of potentially toxic chemicals with the minimum risk to personnel and the environment.

The following Example illustrates the production of a water soluble package according to the invention:

EXAMPLE

PVA film was used to form bags containing a liquid herbicide by the following procedure using conventional bag-making equipment.

The PVA film used was SYNTANA Type KA cold water soluble PVA film, thickness 40 micrometres, with a degree of saponification of 88 mol %.

The liquid herbicide was a mixture of bromoxynil and ioxynil esters in solution in a naphthalene solvent. The liquid contained less than 3% water.

An open-topped bag was produced from the PVA film by forming the film around a shoulder and then heat sealing simultaneously the bottom and side of the bag. A jaw pressure of 2 kg/cm$^2$ was used, with a jaw temperature of 160°C and a dwell time of 1 second. The ambient temperature was 18°C and the relative humidity 35%.

500ml of liquid herbicide was then dispensed into the bag the top of which was then sealed leaving an air space of 4 to 5% volume within the bag. Each bag was 120 mm by 205 mm and 10 bags per minute were produced.

Each filled bag was heat sealed at the top after dispensing of the liquid leaving an air space of 4 to 5% of the bag volume, the bag being about 80% full of liquid. The bag is therefore both incompletely filled and has an air space above the liquid.

Each bag was then placed into a container as illustrated in the accompanying drawings. The container material was polypropylene. Each container was sealed using a laminated top comprising PET (polyethylene terephthalate), aluminium and paper layers. The PET layer was heat sealed to the top flange of the container leaving an air space between the bag and the container. The relative humidity in the air space was 50% at 20°C.

A further example of a package in accordance with this invention will now be described by reference to the accompanying drawings, in which:-

Figure 1 is a side elevation of the complete package;
Figure 2 is an underneath view of the outer container; and
Figure 3 shows half of a longitudinal radial section through the complete package.

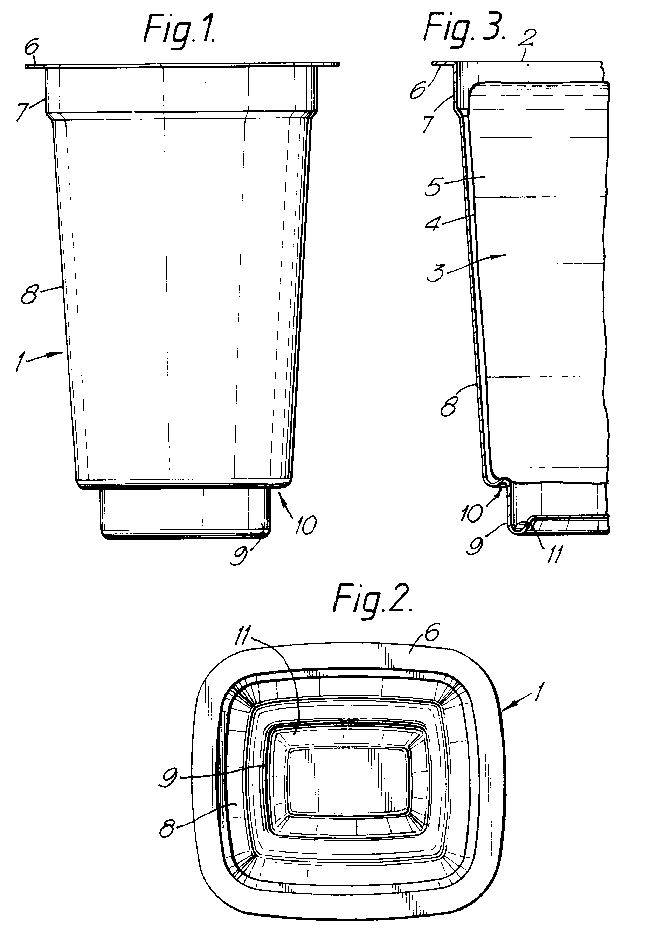

The package comprises an outer container 1 having a foil lid 2 surrounding and enclosing an envelope (a bag or sachet) 3. The bag or sachet 3 is made of cold water soluble grade polyvinyl alcohol film 4 made from 88% alcoholysed polyvinyl acetate having a wall thickness of 30 microns which is heat-sealed into the form of a sachet containing 500 millilitres of a concentrated dispersion 5 of a chemical in an organic liquid. The sachet 3 is housed inside the container 1 which includes a substantially flat top flange 6 connected by upper collar portion 7 to a tapering side wall 8. The container 1 also includes a foot 9 which is joined to the lowest end of the side wall 8 by a shock absorbing section 10. The container has an approximately rectangular cross-section with rounded corners between adjacent sides and with outwardly bowed faces as shown most clearly in Figure 2. The rectangular shape of the container allows relatively efficient packing together of a number of containers. The container is also tapered downwardly as shown in Fig. 1, in this case by 3 to 4° from vertical, and this allows a number of containers to be nested together when empty for easy storage or disposal. The taper also means that the sachet is supported by the walls of the container against downward movement. The container 1 is injection moulded from a block polymer polypropylene having a high melt flow index and typically having a constant wall thickness throughout of, for example, substantially one millimetre. The container is made to be translucent so that, as described below, leakage of the sachet can be detected without opening the container. In an alternative embodiment the foot only can be made translucent so that leakage can be seen. Further, polypropylene is water repellent and this makes washing of the container easier. The material from which the container is made, in this embodiment polypropylene, is sufficiently rigid to support and protect the sachet but also has a degree of flexibility which helps absorb shocks or blows to the package.

The shock absorbing section 10 is corrugated being S-shaped in cross-section as shown in Figure 3 the ratio of the length of the section to its thickness being about 9:1, this ratio being chosen to allow the desired amount of flexing having regard to the flexibility of the material from which it is formed.

The corrugated section forms generally transverse connection joining the lower edge of the side wall 8 to the upper edge of the foot 9 which is capable of flexing as a result of the natural resilience of the thermo-plastics material to allow some relative upwards and downwards movement to occur between the foot 9 and the side wall 8. This flexing absorbs shock loads applied to the container 1 for instance if it is inadvertently dropped, e.g. during transport or handling. During transport of the packages any outer packaging containing an array of such packages may be dropped or at least suffer substantial shock loads as it is transported by, for example, lorry, or even when it is lifted and lowered by, for example, a fork lift truck. The shock absorbing portion formed between the foot and the side wall of the container flexes and absorbs such shock loads and this partly cushions the loads applied to the envelope and ensures that the outer container does not split under the application of such a shock load. Equally, after the package has been removed from any outer container the shock absorber absorbs loads if the package is, inadvertently, dropped onto a solid floor just before it is opened to gain access to the envelope. Typically, if the package falls on its foot the shock absorbing section absorbs any shock load so imposed on the container. Equally, if the container falls on its side wall the rounded nature of the side wall means that the side wall can flex and again absorb any shock loads. Further, if the container lands upon its top flange this tends also to flex to absorb the shock load.

The base of the container preferably includes a recessed portion inside the container to collect any liquid which may escape from the envelope. As can be seen from Figure 3 the foot 9 is formed with a raised central section surrounded by trough 11. The trough is provided to collect any liquid which accidently leaks from the sachet before use. As the container, or at least this part of it, is translucent it is possible for the user to look at the foot and see whether the sachet has leaked before opening the container. Thus accidental contact with leaked contents can be avoided. As will be appreciated from Fig. 3 the raised central portion of the foot leaves a space underneath it which, when the container is stood on a shelf, would form a closed cavity. This could cause problems because if the sachet does leak into the container then vapour from the concentrate could pass through the container material into the cavity where it would be trapped and could attack the shelf or any coating on the shelf. Thus, to allow ventilation of this cavity the underside of the trough 11 is formed with at least one recess or groove (not shown) directed radially of the foot.

In this embodiment the corrugated section 10 also provides an internal annular shoulder to the container upon which the sachet rests. The curve of the corrugation provides a smooth surface which will not strain or puncture the sachet. The sachet is thus supported above the bottom of the container resulting in further isolation from mechanical shock. The sachet can also flex under stress into the space to absorb shock.

The interior of the container is deliberately made to be smooth so as to allow the sachet to slide easily out of the container for use.

The sachet 3 is held inside the container 1 by the foil lid 2 which is heat-sealed onto the flange 6 of the container 1 or which may alternatively be connected by an adhesive.

The foil lid 2 in this embodiment is made from a heat sealable laminated material such as a polyethylene terephthalate/aluminium/paper laminate and is larger than the external diameter of the flange 6 to leave a large flap around the container which can be used to tear-off the lid.

The outer container 1 and lid 2 provide protection for the sachet 3 and so protect it from contact with water and hence its premature dissolution. It also provides an additional barrier layer around the concentrate 5 inside the bag or sachet 3 to provide an additional barrier in case of rupture of the bag or sachet 3 which prevents the potentially harmful chemical 5 from contact with personnel or the environment. However, to use the concentrate, the foil lid 2 is simply removed and then the sachet, still sealed, is dropped into a sprayer tank containing a predetermined amount of water. The material 4 of the bag or sachet dissolves rapidly in the water so allowing the contents 5 to be dispersed throughout the water in the sprayer tank on mixing. The outer container 1 is not contaminated with the concentrated chemical and can thus be disposed of without taking any special precautions and the personnel dealing with the concentrated chemical never come into contact with it, so reducing the hazards and risks involved in handling such potentially harmful materials.

## Claims

1. A package for a liquid comprising an outer container (1) and an inner water-soluble or water-dispersible envelope (3) containing the liquid (5) and insoluble and not dispersible in it, the liquid (5) comprising a phytosanitary chemical characterised in that the outer container (1) is semi-rigid having a degree of flexibility which helps absorb shocks or blows and comprises a shock-absorbing base (9,10) which absorbs shock when the package is dropped, such that the outer container (1) cushions shock loads applied to the envelope (3), and in that the container comprises a tubular body-part (8) surrounding the envelope and a base-part (9), the body-part being joined to the base-part by a flexible strip (10) which comprises part of said shock-absorbing base (9) and the base-part comprising an internal shoulder of the container (1) on which the envelope (3) is supported to leave a space between the envelope (3) and bottom of the container (1).

2. A package according to claim 1, wherein the inner envelope (3) is disposed in the outer container (1) to leave a space between the envelope and container into which the envelope can deform.

3. A package according to claim 1 or 2 in which said flexible strip (10) comprises a corrugation in the wall of the container (1) extending radially inwardly of said container from the bottom of the body-part (8) to the base-part (9).

4. A package according to claim 2 wherein said flexible strip (10) is formed by a sinuous formation in the wall of the container spaced from the bottom of the container (1) and extending from the body-part (8) to the base-part (9).

5. A package according to any one of the preceding claims wherein the inside surface of the outer container (1) is is configured and adapted to facilitate sliding exit of the envelope (3) from the container (1).

6. A packaging according to claim 5 wherein the interior of the container (1) is smooth so as to allow the envelope (3) to slide out of the outer container (1).

7. A package according to any one of the preceding claims which comprises a removable lid (2) sealing the outer container (1).

8. A package according to claim 7 in which the lid (2) comprises a paper/aluminium/plastics laminate in which the plastics layer is heat sealed to the outer container (1).

9. A package according to claim 8 in which the plastics layer comprises polyethylene terephthalate.

10. A package according to any one of the preceding claims in which the outer container (1) comprises polypropylene.

11. A package according to any one of the preceding claims in which the container (1) is translucent or includes a translucent region.

12. A package according to any one of the preceding claims wherein the base (9) includes a recessed portion (11) inside the container (1) to collect any liquid which may escape from the envelope (3).

13. A package according to claim 12 wherein said recessed portion (11) is formed between an outer side wall of the base and a raised central portion of the base.

14. A package according to claim 13 wherein the underside of the recessed portion (11) forms an annular stand for the package and at least one recess or groove is provided in the said underside to enable communication between the region under said raised central portion of the base and the exterior when the package is stood on a surface.

15. A package according to any one of the preceding claims in which the base of the container (9) comprises a translucent region adapted to receive liquid which may leak from the envelope (3).

16. A package according to any one of the preceding claims in which the end of the container (1) remote from the base (9) is not substantially narrower than the rest of the container.

17. A package according to any one of the preceding claims in which the container (1) tapers towards the base (9) allowing the container when empty to nest in other, like, empty containers.

18. A package according to any one of the preceding claims in which the container (1) tapers towards the base (9) to provide support against downward movement of the envelope (3).

19. A package according to any one of the preceding claims which comprises a space between the envelope (3) and outer container (1) which is at least about 5% of the volume of the container.

20. A package according to any one of the preceding claims in which the envelope (3) contains from a quarter to three litres of liquid (5).

21. A package according to any one of the preceding claims in which the liquid contents (5) of the envelope (3) comprise an additive to increase viscosity.

22. A package according to any one of the preceding claims in which the combined volume of liquid (5) and any air space in the envelope (3) is less than the maximum capacity of envelope so that the envelope is loosely filled and can flex.

23. A package according to any one of the preceding claims in which the liquid (5) comprises a pesticide.

24. A package according to any one of the preceding claims in which the liquid (5) comprises a fungicide, insecticide or herbicide.

25. A package according to any one of the preceding claims in which the envelope (3) is heat sealed by a seal which is water soluble and contains from a quarter to three litres of liquid (5), and in which the outer container (1) is hermetically sealed and there is a space between the envelope (3) and the outer container (1) which is at least about 5% of the volume of the container.

**Patentansprüche**

1. Verpackung für eine Flüssigkeit, umfassend einen äußeren Behälter (1) und eine innere wasserlösliche oder in Wasser dispergierbare Hülle (3), enthaltend die Flüssigkeit (5), und die in dieser unlöslich oder nicht dispergierbar ist, wobei die Flüssigkeit (5) ein phytosanitäres chemisches Mittel umfaßt, dadurch gekennzeichnet, daß der äußere Behälter (1) halbsteif ist und einen Flexibilitätsgrad besitzt, der dazu beiträgt, Schläge oder Stöße zu absorbieren, und einen schlagabsorbierenden bzw. stoßdämpfenden Unterteil (9, 10) umfaßt, der einen Schlag absorbiert, wenn die Packung fallengelassen wird, so daß der äußere Behälter (1) Stoßbelastungen, die auf die Hülle (3) ausgeübt werden, dämpft, und daß der Behälter einen rohrförmigen Hauptteil (8) umfaßt, der die Hülle umgibt, und einen Unterteil (9) wobei der Hauptteil mit dem Grundteil durch einen flexiblen Streifen (10) verbunden ist, der einen Teil des stoßabsorbierenden Unterteils (9) umfaßt, und der Grundteil eine interne Schulter des Behälters (1) umfaßt, auf der die Hülle (3) fest aufliegt unter Bildung eines Raums zwischen der Hülle (3) und dem Boden des Behälters (1).

2. Verpackung nach Anspruch 1, wobei die innere Hülle (3) so in dem äußeren Behälter (1) angeordnet ist, daß ein Zwischenraum zwischen der Hülle und dein Behälter verbleibt, in den sich die Hülle verformen kann.

3. Verpackung nach Anspruch 1 oder 2, wobei der flexible Streifen (10) eine Rille in der Wand des Behälters (1) umfaßt, die sich vom Boden des Hauptteils (8) nach dem Unterteil (9) radial in das Innere des Behälters erstreckt.

4. Verpackung nach Anspruch 2, wobei der flexible Streifen (10) aus einer gewundenen (sinusförmigen) Formation in der Wand des Behälters gebildet wird in einem Abstand vom Boden des Behälters (1) und die sich von dem Hauptteil (8) zu dem Unterteil (9) erstreckt.

5. Verpackung nach einem der vorangehenden Ansprüche, wobei die innere Oberfläche des äußeren Behälters (1) so geformt und geeignet ist, ein gleitendes Herausziehen der Hülle (3) aus dem Behälters (1) zu ermöglichen.

6. Verpackung nach Anspruch 5, wobei das innere des Behälters (1) glatt ist, um ein Herausziehen der Hülle (3) aus dem äußeren Behälter (1) zu ermöglichen.

7. Verpackung nach einem der vorangehenden Ansprüche, umfassend einen entfernbaren Deckel (2), der den äußeren Behälter (1) verschließt.

8. Verpackung nach Anspruch 7, wobei der Deckel (2) ein Papier/Aluminium/Kunststoff-Laminat umfaßt, bei dem die Kunststoffschicht mit dem äußeren Behälter (1) heiß versiegelt ist.

9. Verpackung nach Anspruch 8, wobei die Kunststoffschicht Polyethylenterephthalat umfaßt.

10. Verpackung nach einem der vorangehenden Ansprüche, wobei der äußere Behälter (1) Polypropylen umfaßt.

11. Verpackung nach einem der vorangehenden Ansprüche, wobei der Behälter (1) durchscheinend ist oder einen durchscheinenden Bereich umfaßt.

12. Verpackung nach einem der vorangehenden Ansprüche, wobei der Unterteil (9) einen vertieften Teil (11) innerhalb des Behälters (1) umfaßt, der etwaige Flüssigkeit aufnimmt, die aus der Hülle (3) austreten kann.

13. Verpackung nach Anspruch 12, wobei der vertiefte Teil (11) zwischen der äußeren Seitenwand des Unterteils und einem erhöhten mittleren Teil des Unterteils gebildet ist.

14. Verpackung nach Anspruch 13, wobei die Unterseite des vertieften Teils (11) einen kreisförmigen Fuß für die Verpackung bildet und mindestens eine Vertiefung oder Rille in der Unterseite vorgesehen ist, um eine Verbindung zwischen dem Bereich unterhalb des erhöhten zentralen Teils des Unterteils und dem Äußeren zu bilden, wenn die Verpackung auf einer Oberfläche steht.

15. Verpackung nach einem der vorangehenden Ansprüche, wobei der Unterteil des Behälters (9) einen durchscheinenden Bereich umfaßt, der geeignet ist, Flüssigkeit aufzunehmen, die aus der Hülle (3) austreten kann.

16. Verpackung nach einem der vorangehenden Ansprüche, wobei das von dem Unterteil (9) entfernte Ende des Behälters (1) nicht wesentlich enger ist als der Rest des Behälters.

17. Verpackung nach einem der vorangehenden Ansprüche, wobei der Behälter (1) auf den Unterteil (9) hin konisch zuläuft, was es ermöglicht, den Behälter, wenn er leer ist, in andere ähnliche leere Behälter einzusetzen.

18. Verpackung nach einem der vorangehenden Ansprüche, wobei der Behälter (1) nach dem Unterteil (9) hin konisch zuläuft, um eine Stütze gegen eine Abwärtsbewegung der Hülle (3) zu bilden.

19. Verpackung nach einem der vorangehenden Ansprüche, umfassend einen Hohlraum zwischen der Hülle (3) und dem äußeren Behälter (1), der mindestens etwa 5 % des Volumens des Behälters ausmacht.

20. Verpackung nach einem der vorangehenden Ansprüche, wobei die Hülle (3) einen viertel bis drei Liter Flüssigkeit (5) enthält.

21. Verpackung nach einem der vorangehenden Ansprüche, wobei der flüssige Inhalt (5) der Hülle (3) ein Additiv zur Erhöhung der Viskosität umfaßt.

22. Verpackung nach einem der vorangehenden Ansprüche, wobei das kombinierte Volumen der Flüssigkeit (5) und eines etwaigen Luftraums in der Hülle (3) weniger als das maximale Fassungsvermögen der Hülle ausmacht, so daß die Hülle lose gefüllt ist und sich verformen kann.

23. Verpackung nach einem der vorangehenden Ansprüche, wobei die Flüssigkeit (5) ein Pestizid umfaßt.

24. Verpackung nach einem der vorangehenden Ansprüche, wobei die Flüssigkeit (5) ein Fungizid, Insektizid oder Herbizid umfaßt.

25. Verpackung nach einem der vorangehenden Ansprüche, wobei die Hülle (3) heiß versiegelt ist durch eine Versiegelung, die wasserlöslich ist, und einen viertel bis drei Liter Flüssigkeit (5) enthält und wobei der äußere Behälter (1) hermetisch verschlossen ist und ein Zwischenraum zwischen der Hülle (3) und dem äußeren Behälter (1) besteht, der mindestens etwa 5 Volumen-% des Behälters ausmacht.

## Revendications

1. Emballage pour un liquide, comprenant un récipient extérieur (1) et une enveloppe intérieure (3) hydrosoluble ou dispersable dans l'eau contenant le liquide (5) et insoluble et non dispersable dans ce liquide, le liquide (5) comprenant un agent chimique phytosanitaire, caractérisé en ce que le récipient extérieur (1) est semi-rigide, avec un degré de flexibilité qui facilite l'absorption des chocs ou des coups et comprend une base d'absorption de chocs (9, 10) qui absorbe les chocs lors de la chute de l'emballage, de telle sorte que le récipient extérieur (1) amortisse les charges par à-coups appliquées à l'enveloppe (3), et en ce que le récipient comprend une partie tubulaire servant de corps (8) entourant l'enveloppe et une partie servant de base (9), la partie servant de base étant jointe à la partie servant de base par une bande flexible (10) qui constitue une partie de ladite base d'absorption de chocs (9) et la partie servant de base comprenant un épaulement intérieur du récipient (1) servant de support à l'enveloppe (3) de manière à laisser un espace entre l'enveloppe (3) et le fond du récipient (1).

2. Emballage suivant la revendication 1, dans laquelle l'enveloppe intérieure (3) est placée dans le récipient extérieur (1) de manière à laisser entre l'enveloppe et le récipient un espace, dans lequel l'enveloppe peut se déformer.

3. Emballage suivant la revendication 1 ou 2, dans lequel la bande flexible (10) comprend une cannelure dans la paroi du récipient (1) s'étendant radialement vers l'intérieur dudit récipient à partir du fond de la pièce servant de corps (8) jusqu'à la partie servant de base (9).

4. Emballage suivant la revendication 2, dans lequel la bande flexible (10) est produite par une formation sinueuse dans la paroi du récipient espacée du fond du récipient (1) et s'étendant de la partie servant de corps (8) à la partie servant de base (9).

5. Emballage suivant l'une quelconque des revendications précédentes, dans lequel la surface intérieure du récipient extérieur (1) présente une configuration et est apte à faciliter la sortie de l'enveloppe (3) par glissement hors du récipient (1).

6. Emballage suivant la revendication 5, dans lequel l'intérieur du récipient (1) est lisse de manière à permettre à l'enveloppe (3) de glisser hors du récipient extérieur (1).

7. Emballage suivant l'une quelconque des revendications précédentes, qui comprend un couvercle amovible (2) obturant hermétiquement le récipient extérieur (1).

8. Emballage suivant la revendication 7, dans lequel le couvercle (2) comprend un stratifié papier/aluminium/matière plastique dans lequel la couche de matière plastique est thermosoudée au récipient extérieur (1).

9. Emballage suivant la revendication 8, dans lequel la couche de matière plastique comprend un polymère de téréphtalate d'éthylène.

10. Emballage suivant l'une quelconque des revendications précédentes, dans lequel le récipient extérieur (1) comprend un polypropylène.

11. Emballage suivant l'une quelconque des revendications précédentes, dans lequel le récipient (1) est translucide ou comprend une région translucide.

12. Emballage suivant l'une quelconque des revendications précédentes, dans lequel la base (9) comprend une portion en creux (11) à l'intérieur du récipient (1) pour collecter toute quantité de liquide pouvant s'échapper hors de l'enveloppe (3).

13. Emballage suivant la revendication 12, dans lequel la portion en creux (11) est formée entre une paroi latérale extérieure de la base et une portion centrale en saillie de cette base.

14. Emballage suivant la revendication 13, dans lequel la face inférieure de la portion en creux (11) forme un socle annulaire pour l'emballage et au moins un évidement ou une rainure est présent dans ladite face inférieure pour permettre la communication entre la région sous ladite portion centrale en saillie de la base et l'extérieur lorsque l'emballage est pose sur une surface.

15. Emballage suivant l'une quelconque des revendications précédentes, dans lequel la base du récipient (9) comprend une région translucide apte à recevoir un liquide pouvant s'échapper hors de l'enveloppe (3).

16. Emballage suivant l'une quelconque des revendications précédentes, dans lequel l'extrémité du récipient (1) éloignée de la base (9) n'est pas notablement plus étroite que le reste du récipient.

17. Emballage suivant l'une quelconque des revendications précédentes, dans lequel le récipient (1) se rétrécit vers la base (9) en permettant au récipient, une fois vide, de se loger dans d'autres récipients identiques vides.

18. Emballage suivant l'une quelconque des revendications précédentes, dans lequel le récipient (1) se rétrécit vers la base (9) pour assurer un support s'opposant à un mouvement vers le bas de l'enveloppe (3).

19. Emballage suivant l'une quelconque des revendications précédentes, qui comprend un espace entre l'enveloppe (3) et le récipient extérieur (1) qui représente au moins environ 5 % du volume du récipient.

20. Emballage suivant l'une quelconque des revendications précédentes, dans lequel l'enveloppe (3) contient un quart à trois litres de liquide (5).

21. Emballage suivant l'une quelconque des revendications précédentes, dans lequel le liquide (5) présent dans l'enveloppe (3) comprend un additif destiné à accroître la viscosité.

22. Emballage suivant l'une quelconque des revendications précédentes, dans lequel le volume total du liquide (5) et de tout volume d'air dans l'enveloppe (3) est inférieur à la capacité maximale de l'enveloppe de telle sorte que l'enveloppe soit remplie à une valeur inférieure à sa capacité maximale et puisse subir une flexion.

23. Emballage suivant l'une quelconque des revendications précédentes, dans lequel le liquide (5) comprend un pesticide.

24. Emballage suivant l'une quelconque des revendications précédentes, dans lequel le liquide (5) comprend un fongicide, un insecticide ou un herbicide.

25. Emballage suivant l'une quelconque des revendications précédentes, dans lequel l'enveloppe (3) est thermosoudée au moyen d'une soudure qui est hydrosoluble et contient un quart à trois litres de liquide (5), et dans lequel le récipient extérieur (1) est obturé hermétiquement et il existe un espace entre l'enveloppe (3) et le récipient extérieur (1) qui représente au moins environ 5 % du volume du récipient.

Fig.1.

Fig.3.

Fig.2.